# DEMANDE DE BREVET EUROPEEN

(11) **EP 3 791 723 A1**
(43) Date de publication de la demande: **17.03.2021**
(21) Numéro de dépôt: 20195112.6
(22) Date de dépôt: 08.09.2020
(51) Int. Cl.: A01N 37/18, A01N 43/40, A01P 17/00

(54) **COMPOSITION RÉPULSIVE ET PROCÉDÉ ASSOCIÉ**

(30) Priorité: 10.09.2019 FR 1909959
(71) Demandeur: Concept Nature Bio, 62620 Barlin (FR)
(72) Inventeur: CONTANT, Laurent, 62620 BARLIN (FR)
(74) Mandataire: Ipside

(57) **Abrégé**

La présente invention concerne une composition liquide apte à procurer un effet répulsif sur un nuisible, sans contact avec ledit nuisible lors de l'application de ladite composition, ledit nuisible étant choisi parmi les mammifères, les oiseaux, les insectes et les acariens, contenant en tant que composés actifs un composé de la famille des capsaïcinoides ou de leurs dérivés, en particulier la capsaïcine, ou un mélange de capsaïcinoides, de la pipérine et un excipient choisi parmi une huile, notamment végétale, un mélange d'au moins deux huiles, notamment végétales ou un mélange d'eau et d'huile(s), notamment végétale(s). De manière caractéristique, elle contient, en outre, une gomme choisie parmi la gomme adragante, la gomme arabique, la gomme xanthane, la gomme guar, la gomme gellane, la gomme de casse et la gomme karaya et/ou un émulsifiant de type polysaccharide ou choisi en particulier parmi la gélatine et la cellulose.

## Description

### Domaine technique

La présente invention concerne une composition répulsive et un procédé de répulsion associé. La présente invention concerne une composition telle que précitée qui a une action répulsive sans contact direct avec ledit nuisible lors de l'application de ladite composition, c'est-à-dire après l'application de ladite composition.

### Art antérieur

La capsaïcine est utilisée dans les bombes répulsives dont le contenu est directement vaporisé sur un mammifère, en général dans les yeux de ce dernier. L'effet irritant de la capsaïcine sur les cellules épithéliales du mammifère et en particulier les muqueuses, empêche ce dernier de s'approcher et le fait fuir. Il en est de même pour la pipérine qui est responsable du piquant du poivre mais qui est moins piquante que la capsaïcine.

Le document CN109181052 A1 décrit un matériau servant à fabriquer des câbles et contenant de la capsaïcine. Ce matériau évite que les rats grignotent les câbles. En effet, lorsque le rat ou la souris grignote le câble, le goût piquant du matériau procuré par la présence de capsaïcine l'empêche de continuer son grignotage.

Le document CN 103768544 B décrit une composition insectifuge contenant de la capsaïcine et un alcool. Cette composition est destinée à être ingérée par un poisson ou diluée dans le bassin ou vivent des poissons.

La capsaïcine est difficile à manipuler du fait de son fort pouvoir irritant lors d'un contact avec la peau et de sa forte odeur. Elle est, tout comme la pipérine, insoluble ou très faiblement soluble dans l'eau. Leur mélange avec de l'eau pose problème. Le document intitulé "critter rider animal repellent ready-to-use spray" décrit une composition répulsive qui contient de la pipérine, de l'huile essentielle de poivre noir et de la capsaïcine. Cette composition ne contient ni eau, ni gomme.

Le document US 8 735 427 B2 concerne une composition répulsive pour les rongeurs. Cette composition contient de la capsaïcine, des huiles minérales et un agent épaississant qui est de la silice fumée. Cette composition ne contient pas de gomme. Le document US 2005/025796 A1 concerne un gel collant obtenu par mélange d'un épaississant à base de polymère d'acide carboxylique avec une huile ou une graisse et de la capsaïcine. Ce produit est destiné à repousser les pigeons. Ce document indique que la formation d'un film d'huile permet à la composition de résister au temps (pluie). Ce produit ne contient ni pipérine, ni gomme.

Le document JP 4 782860 B2 décrit une composition répulsive à l'égard des insectes, à appliquer sur des graines, grains ou autre produit sec qui contient au moins un composé terpénique choisi parmi le groupe suivant :le nérol, le fenchol, le bornéol, le fenchoate, l'acétate de terpényle, l'acétate de linalyle et l'ocimène (phéromone). La composition peut également contenir de la capsaïcine, du piment ou de la wasabi. Elle peut également contenir un agent gélifiant qui est la gomme de guar transformée (hydroxypropyl guar). La composition décrite dans ce document sert à éloigner les insectes sur des produits secs. Elle agit sur les charançons et la teigne des fruits secs. La forme en gel évite la migration des terpènes dans le récipient de stockage des céréales, par exemple. Le gel facilite l'application de la composition dans le récipient et permet la visualisation de la quantité de composition appliquée. La composition n'est pas liquide et n'est appliquée sur les produits mais dans le récipient qui les contient.

Le document FR 2 948 261 A1 décrit une composition répulsive qui doit être absorbée par voie orale par un mammifère afin de faire fuir un insecte. La composition contient comme agent répulsif (non direct) du géraniol, du citronellol ou du citronellal qui peut être contenu dans une huile essentielle. La composition ne contient ni pipérine ni aucun composé de la famille des capsaïcinoides ou de leurs dérivés.

Le document JP 2001 114614 A1 concerne un répulsif pour rat. Il contient de l'acide iso thiocyanique et en tant que répulsif au moins un composé choisi parmi l'eucalyptol, de l'oxide de linalol, du camphre, de l'hexanal ou du citral. Cette composition ne contient aucun composé de la famille des capsaïcinoides ou de leurs dérivés, en particulier la capsaïcine.

### Problème technique à résoudre

Un but de la présente invention et de proposer une composition liquide qui puisse être facilement appliquée par épandage ou pulvérisation et qui procure un effet répulsif sur un nuisible, sans contact avec ce dernier lors de l'application de la composition.

Un autre but de la présente invention est de proposer une composition telle que précitée qui présente une rémanence assez importante afin d'espacer les applications.

Un autre but de la présente invention est de fournir une composition répulsive telle que précitée qui soit homogène et stable dans le temps.

Un autre but de la présente invention est de proposer une composition telle que précitée qui soit sans danger pour les végétaux et puisse être appliquée directement sur ces derniers.

Un autre but de la présente invention est de proposer une composition répulsive qui soit entièrement biodégradable et dont les composants sont d'origine naturelle.

Un autre but de la présente invention est de proposer une composition répulsive telle que précitée qui soit économique et puisse servir à traiter une grande surface ou un grand nombre de végétaux, notamment des arbres.

Un autre but de la présente invention est de proposer une composition répulsive qui soit efficace sur différents nuisibles, mammifères ou non.

Un autre but de la présente invention est de proposer une composition répulsive liquide, donc apte à être pulvérisée ou utilisée pour l'enrobage des grains et qui résiste à la pluie.

### Brève description de l'invention

La présente invention concerne une composition liquide apte à procurer un effet répulsif sur un nuisible, sans contact avec ledit nuisible lors de l'application de ladite composition, ledit nuisible étant choisi parmi les mammifères, les oiseaux, les insectes et les acariens, elle contient en tant que composé actif un composé de la famille des capsaïcinoides ou de leurs dérivés, en particulier la capsaïcine, ou un mélange de capsaïcinoides, de la pipérine et un excipient choisi parmi une huile, notamment végétale, un mélange d'au moins deux huiles, notamment végétales ou un mélange d'eau et d'huile(s), notamment végétale(s). De manière caractéristique, selon l'invention, elle contient, en outre, au moins une gomme choisie parmi la gomme adragante, la gomme arabique, la gomme xanthane, la gomme guar, la gomme gellane, la gomme de casse et la gomme karaya et/ou un émulsifiant choisi parmi les polysaccharides ou choisi en particulier parmi la gélatine et la cellulose.

Les gommes seules ou en mélange sont préférées. La gomme permet d'obtenir un mélange homogène et stable dans l'huile et une émulsion homogène huile/eau (huile dans l'eau) et eau/huile ; l'émulsion est stable même lorsque l'eau est majoritaire. On obtient ainsi une émulsion stable (huile/eau et eau/huile) pendant 48 heures. Cette émulsion peut être épandue ou pulvérisée.

Par ailleurs, la gomme ou le mélange de gommes augmente la rémanence de la composition et sa résistance au lessivage par l'eau. Elle évite que la composition une fois appliquée sur des graines ou des plantes ou même sur un sol nu ne soit trop rapidement lessivée par la pluie ou la simple rosée. La gomme permet d'obtenir une rémanence de l'ordre de deux mois si l'application de la composition a été faite par temps sec.

La quantité de gomme(s) et/ou d'émulsifiant est sensiblement égale ou supérieure à 1% et sensiblement égale ou inférieure à 30% De préférence une gomme seule est utilisée dans les quantités précitées. De préférence le % massique de gomme est supérieur à 1% et sensiblement égal ou inférieur à 30%

Le pourcentage de gomme est plus élevé dans la composition huileuse destinée à l'enrobage des graines. Il est, par exemple sensiblement égal ou supérieur à 20%. Ceci permet de limiter le lessivage par la pluie des graines.

Dans la composition huileuse destinée à être diluée, le pourcentage massique de la gomme est de préférence inférieur à 10%, de préférence inférieur à 5%. Ceci permet de réduire le lessivage et d'obtenir une composition pulvérisable, notamment une émulsion. Le pourcentage de gomme est réduit du fait du plus long temps de mélange de cette composition dans les machines agricoles, notamment lors de leur déplacement. Néanmoins, elle reste résistante au lessivage et répulsive.

Dans le mélange biphasique prêt à l'emploi, le pourcentage massique de la gomme est supérieur à 10% dans la phase huileuse. On obtient ainsi une émulsion sous l'effet d'une simple agitation manuelle.

Le pourcentage massique de la gomme ou des gommes est supérieur à 1% et inférieur ou égal à 30%.

Les capsaïcinoides regroupent les composés suivants : la capsaïcine, la dihydrocapsaïcine, la nordihydrocapsaïcine, l'homocapsaïcine et l'homodihydrocapsaïcine. Les dérivés des capsaïcinoides regroupent au sens de la présente invention tous les composés synthétiques ou naturels qui présentent un groupement ou plus différent de ceux d'un composé de la famille des capsaïcinoides et qui présentent le même pouvoir piquant, notamment la résinifératoxine et la tinyatoxine. Avantageusement, la composition contient un composé choisi parmi la capsaïcine, la dihydrocapsaïcine, la nordihydrocapsaïcine, l'homocapsaïcine et l'homodihydrocapsaïcine et en particulier la capsaïcine.

Avantageusement, la composition de l'invention contient en tant qu'ingrédients actifs, de la capsaïcine et de la pipérine.

La pipérine est un composé qui est responsable du piquant du poivre ; elle vient compléter l'action de la capsaïcine ou du composé de la même famille en conférant à la composition de l'invention une odeur piquante rémanente après l'application de la composition selon l'invention. La pipérine est plus facile à manipuler que les capsaïcinoides et en particulier que la capsaïcine. Elle permet de réduire la quantité de capsaïcine sans baisse de l'effet répulsif.

L'huile n'est pas limitée selon l'invention. Elle peut être une huile végétale comme l'huile de colza ou l'huile d'arachide ou un mélange d'huiles. C'est le mérite de la Demanderesse que d'avoir mis en évidence que les huiles végétales s'avèrent être de bon solvants/excipients des ingrédients actifs précités et peuvent être appliquées sur les plantes sans dommage pour ces dernières.

La composition selon l'invention peut se présenter sous la forme d'un mélange biphasique, d'une émulsion, d'une solution micellaire, par exemple. Avantageusement, elle se présente sous la forme d'une émulsion huile/eau ou eau/huile (eau dans l'huile).

Elle peut néanmoins également être une solution homogène huile/huile ou un mélange biphasique huile/eau, l'huile étant minoritaire en volume, par exemple.

Dans tous les cas, quelle que soit sa forme, elle présente avantageusement une viscosité lui permettant d'être appliquée par pulvérisation.

Selon un premier mode de réalisation, la composition de l'invention est constituée d'huile(s), en particulier végétale(s) servant d'excipient, de capsaïcine et de pipérine en tant qu'ingrédients actifs et d'une gomme. Cette simple composition peut être diluée dans de l'eau pour former une émulsion stable et qui permet d'avoir une action répulsive sur les mammifères, les insectes et les acariens même avec un grand taux de dilution (de l'ordre de 80-90% ou plus en volume). Ce taux de dilution permet d'obtenir une composition répulsive efficace mais sans danger pour l'environnement, pour les humains pendant et après application. Cette composition s'avère efficace pour faire fuir les pucerons, les acariens, la cicadelle, les chenilles, la mouche du houx, le vers taupin, le chrysomèle, les cecidozoaires, les acariens responsables de la gale, la mineuse, la larve du léma, les cecidomyies, la tordeuse des céréales, les mammifères, en particulier, le lapin, les cervidés, en particulier le chevreuil, le sanglier, le chien, la taupe, les oiseaux, en particulier le corbeau et le pigeon ramier par simple épandage ou pulvérisation sur une surface nue ou cultivée en l'absence du nuisible. Avantageusement, la composition précitée contient, en outre, au moins un ingrédient actif choisi parmi le géraniol, le béta caryophyllène, le linalol, l'acétate de linalyle, le camphre, l'eucalyptol, le menthol, la menthone, le limonène, l'alpha pinène, le béta pinène, le p-cymène et le gamma terpinène.

Le géraniol est connu comme insectifuge, notamment sur la tique, le cancrelat, les moustiques, les mouches et les fourmis.

Le beta caryophillène procure en plus des autres composés une odeur poivrée à la composition de l'invention.

Le linalol et l'acétate de linalyle sont des composants de l'huile essentielle de lavande mais qui, chez la lavande, ne procurent pas une action insectifuge sur les nuisibles de la lavande que sont la cécidomyie, le puceron et la chrysomèle. Il existe donc une synergie entre ces composés et les autres composés de l'invention, notamment la capsaïcine et la pipérine puisque la composition de l'invention s'avère être insectifuge sur ces insectes comme indiqué dans la partie relative aux exemples de la présente demande.

Le camphre est connu comme un insecticide contre les mites mais il n'est pas connu comme insectifuge. Or, la Demanderesse a mis en évidence un effet insectifuge de la composition selon l'invention du fait de l'odeur dégagée par cette dernière après son application.

L'eucalyptol est connu comme insectifuge sur la tique et le moustique.

Le menthol est connu comme acaricide.

La menthone est utilisée en parfumerie et procure un effet rafraichissant. Elle a une forte odeur.

Le limonène possède deux énantiomères ; le R est connu comme insecticide tandis que le S a une odeur de térébenthine. Avantageusement, la composition de l'invention contient du S-limonène. Le limonène est connu comme insecticide.

L'alpha pinène et le béta pinène sont connus pour leurs propriétés antiseptiques.

Le p-cymène n'a aucune fonction biologique connue mais il est connu comme insecticide. Néanmoins, le document EP3424322 A divulgue une composition insecticide qui comprend des terpènes et un insecticide synthétique indiquant que les terpènes seuls ne sont pas assez actifs.

Le gamma terpinène se trouve dans les citrons, notamment. Il est connu en association avec le béta caryophyllène pour attirer les insectes comme décrit dans le document US10143197 B.

Selon une variante du premier mode de réalisation, la composition contient en outre, en tant qu'ingrédients actifs, du linalol, de l'acétate de linalyle et du camphre. Elle est avantageusement constituée d'huile(s) en tant qu'excipient, de capsaïcine, de pipérine, de linalol, d'acétate de linalyle et de camphre en tant qu'ingrédients actifs et de gomme. Cette composition s'avère efficace pure ou diluée dans de l'eau sur les martres, lesquelles peuvent attaquer les cultures de baies comme les framboises ou les mûres, par exemple. La Demanderesse a en effet mis en évidence que la capsaïcine et la pipérine combinées ne parvenaient pas à éloigner les martres. En revanche, l'ajout de camphre, de linalol et d'acétate de linalyle, présent par exemple dans l'huile essentielle de lavandin, permet de les faire fuir de manière efficace pendant au moins 2 mois. Cette composition peut être diluée dans de l'eau sans perte d'efficacité même avec un taux de dilution de 90-96% en volume.

Selon une deuxième variante du premier mode de réalisation, la composition contient, en outre, en tant qu'ingrédients actifs, de l'eucalyptol, du menthol et de la menthone, du limonène, de l'alpha pinène, du béta pinène et du béta caryophillène. Cette composition même après dilution dans de l'eau, notamment, s'avère efficace pour faire fuir les rats et les souris du fait de son odeur. La Demanderesse a en effet constaté que les rats et souris ont un odorat moins agressé par la combinaison de la capsaïcine et de la pipérine. L'ajout d'eucalyptol, menthol, menthone, limonène, alpha pinène, béta pinène et béta caryophillène permet de faire fuir efficacement les rats et souris qui semblent plus incommodés par les odeurs mentholées et/ou citronnées. La composition peut être diluée même à un taux de dilution en volume de 95% sans perte d'efficacité.

Selon une variante préférée, la composition est constituée de capsaïcine, de pipérine, d'eucalyptol, menthol, menthone, limonène, alpha pinène, béta pinène, béta caryophillène et d'une gomme, le tout dans un excipient qui une huile végétale ou un mélange d'huile végétales. Cette composition est particulièrement efficace même diluée, notamment dans de l'eau pour faire fuir du fait de son odeur les rats et souris. Elle présente une bonne rémanence de l'ordre de 2 mois, même diluée à 80%-97% en volume avec de l'eau.

Selon une troisième variante du premier mode de réalisation, la composition selon l'invention contient en outre, en tant qu'ingrédients actifs, de l'eucalyptol, du limonène, de l'alpha pinène, du p-cymène, du gamma terpinène. Cette composition s'avère efficace même diluée dans de l'eau sur le chat. C'est le mérite de la Demanderesse que d'avoir mis en évidence que le chat n'était pas suffisamment incommodé par la pipérine et la capsaïcine combinées.

Avantageusement, elle est constituée de capsaïcine, de piperine, de gomme, d'eucalyptol, de limonène, d'alpha pinène, de p-cymène, de gamma terpinène dans un excipient qui est une huile végétale ou un mélange d'huiles végétales.

Selon un second mode de réalisation, la composition contient, en outre, en tant qu'ingrédients actifs, du géraniol et du béta caryophyllène. Avantageusement cette composition contient de l'huile ou un mélange d'huiles en tant qu'excipient. Avantageusement, la composition est constituée de capsaïcine, de gomme, de pipérine, de géraniol, de béta caryophillène et d'un excipient choisi parmi une huile végétale ou un mélange d'huile végétales.

Cette composition relative au second mode de réalisation peut être utilisée pour enrober des graines sans empêcher leur germination. Elle prévient l'apparition des insectes et éloigne des animaux tels que mammifères ou oiseaux de par l'odeur qu'elle dégage. Cette odeur est rémanente. En effet, de manière surprenante, la Demanderesse a mis en évidence que c'est l'odeur de la composition et non l'ingestion des graines traitées qui produit un effet répulsif sur les nuisibles.

Le béta caryophillène permet d'utiliser moins de capsaïcine. Le géraniol agit en synergie avec la pipérine et la capsaïcine ou autre(s) capsaïcinoide(s) pour un effet insectifuge.

Quel que soit le mode de réalisation, lorsque la composition selon l'invention contient en tant qu'excipient une huile ou un mélange d'huile, elle contient un pourcentage massique de capsaïcine sensiblement supérieur ou égal à 1,5% et sensiblement inférieur ou égal à 15%, notamment sensiblement égal ou supérieur à 2,5% ou sensiblement égal ou inférieur à 10% et/ou un pourcentage massique de pipérine sensiblement égal ou supérieur à 10% ou sensiblement égal ou inférieur à 25%.

La Demanderesse a en effet mis en évidence qu'une plus forte proportion de pipérine permet de former un mélange biphasique qui en petite quantité et par agitation manuelle permet d'obtenir une émulsion stable apte à être pulvérisée ou épandue. Ainsi, pour former un mélange biphasique en petite quantité apte à être agité manuellement pour former une émulsion, la phase huile de ce mélange contient avantageusement plus de 10% en masse de pipérine et avantageusement 25,0% en masse de pipérine ou moins. Dans ce cas, le pourcentage massique de capsaïcine est supérieur à 2,5% et inférieur ou égal à 10,0%.

La présente invention concerne également une composition qui contient en tant qu'excipient de l'huile(s) et de l'eau. Lorsque la composition contient en outre de l'eau en tant qu'excipient, elle contient en volume au moins 25%, en particulier 30% d'eau et en particulier, au moins 80% ou 90 % d'eau.

Lorsque la composition contient de l'eau, elle contient en volume au moins 30%, voire 80% d'eau et en particulier, au moins 90 % d'eau. La Demanderesse a mis en évidence une activité répulsive même avec de telles dilution. Le mélange s'avère ainsi sans danger pour les utilisateurs et l'environnement ; il s'agit bien d'une activité répulsive même sur les insectes.

Pour tous les autres ingrédients, la quantité est sensiblement égale ou inférieure à 2,5% en masse.

La présente invention concerne également un procédé de répulsion d'un nuisible choisi parmi les insectes ou arachnides, en particulier les pucerons, les acariens, la cicadelle, les chenilles, la mouche du houx, le vers taupin, le chrysomèle, les cecidozoaires, les acariens responsables de la gale, la mineuse, la larve du léma, les cecidomyies, la tordeuse des céréales, les mammifères, en particulier, le lapin, les cervidés, en particulier le chevreuil, le sanglier, la martre, le chien, le chat, la taupe, les oiseaux, en particulier le corbeau et le pigeon ramier.

Selon l'invention, de manière caractéristique, on enrobe des graines avec une composition selon l'invention ou on applique la composition selon l'invention, sur une surface éventuellement plantée ou sur un arbre, sans contact avec ledit nuisible. L'enrobage est mis en œuvre avant de semer les graines. L'application peut se faire par pulvérisation, par exemple ou épandage ou imprégnation d'un substrat (chiffons pour les taupes, par exemple). Elle est mise en œuvre à titre curatif ou préventif que le nuisible soit déjà présent, de passage ou non.

Lorsqu'il y a une infestation d'insectes ou d'acariens, la Demanderesse n'a pas remarqué de mort des insectes, notamment des pucerons lors de la pulvérisation de la composition sans contact direct avec le puceron. Dans le cas des insectes, il s'agit également d'une répulsion qui ne met pas en œuvre l'ingestion de la composition par l'insecte puis la composition est dispersée sur la surface infestée. La composition de l'invention permet donc de respecter la biodiversité.

En revanche, lorsque la composition est pulvérisée sur les pucerons, elle a directement une action insecticide.

### Définitions

Lorsqu'un composé peut avoir des énantiomères et/ou des diastéréoisomères, tous les énantiomères et diastéréoisomères sont englobés dans la présente invention, sauf mention contraire. Le mélange des deux formes et notamment le mélange racémique est aussi englobé au sens de la présente invention. Ainsi les formes L et D sont comprises au sens de l'invention ; les formes R et Z ainsi que toutes les formes (R)(S), (R)(R), (S)(S), (S)(R) sont englobées au sens de l'invention, sauf mention contraire. Le taux de dilution représente le % en volume d'eau de la composition selon l'invention.

La terme « gomme » désigne les gommes naturelles issues des végétaux.

Le terme « odeur(s) » désigne le ou les composés organiques volatils issus de l'évaporation à pression atmosphérique et température ambiante ou plus de la composition de l'invention, après application de cette dernière.

La présente invention, ses caractéristiques et les différents avantages qu'elle procure apparaîtront mieux à la lecture de la description qui suit de quatre modes de réalisation exposés à titre d'exemples non limitatifs, qui font référence aux dessins annexés sur lesquels :
- la Fig. 1 représente un tronc de prunier après traitement par la composition selon l'invention.
- la Fig. 2 représente une photographie après pulvérisation d'eau puis séchage d'une feuille de maïs sur laquelle la composition de l'invention a, au préalable, été appliquée ;et
- la Fig. 3 représente une photographie après pulvérisation d'eau puis séchage d'une feuille de maïs sur laquelle la même composition qu'utilisée pour la Fig. 2 mais ne contenant pas de gomme a, au préalable, été appliquée.

### EXEMPLES

Compositions à diluer dans de l'eau ou une huile ou un mélange eau/huile pour pulvérisation.
Example 1

| Ingrédient | % massique |
|---|---|
| Capsaïcine | 2,5≤X≤10 |
| Pipérine | X≤2,5 |
| Gomme | 1<X≤30 |
| Huile | En complément à 100% |

Example 2 : composition à diluer dans de l'eau ou une huile ou un mélange eau/huile pour pulvérisation et particulièrement active contre les martres

**tableau 2**

| Ingrédient | % massique |
|---|---|
| Capsaïcine | 2,5≤X≤10 |
| Pipérine | X≤2,5 |
| Gomme | 1 <X≤30 |
| linalol | X≤2,5 |
| Acétate de linalyle | X≤2,5 |
| Camphre | X≤2,5 |
| Béta caryophyllène | X≤2,5 |
| huile | Complément à 100% |

Example 3 : composition à diluer dans de l'eau ou une huile ou un mélange eau/huile pour pulvérisation et particulièrement active contre le rats et les souris

**Tableau 3**

| Ingrédient | % massique |
|---|---|
| Capsaïcine | 2,5≤X≤10 |
| eucalyptol | X≤2,5 |
| Gomme | 1<X≤30 |
| Menthol | X≤2,5 |
| menthone | X≤2,5 |
| Limonène | X≤2,5 |
| Alpha pinène | X≤2,5 |
| Béta pinène | X≤2,5 |
| Pipérine | X≤2,5 |
| Béta caryophillène | X≤2,5 |
| huile | Complément à 100% |

Exemple 4 : composition à diluer dans de l'eau ou une huile ou un mélange eau/huile pour pulvérisation et particulièrement active contre les chats.

**Tableau 4**

| Ingrédient | % massique |
|---|---|
| Capsaïcine | 2,5≤X≤10 |
| eucalyptol | 2,5≤X≤10 |
| Gomme | 1 <X≤30 |
| limonène | X≤2,5 |
| Alpha pinène | X≤2,5 |
| p-cymène | X≤2,5 |
| gamma terpinène | X≤2,5 |
| Pipérine | X≤2,5 |
| Huile | Complément à 100% |

Deuxième mode de réalisation : composition huileuse pour enrobage des graines Exemple 5

**Tableau 5**

| Ingrédient | % massique |
|---|---|
| Capsaïcine | X≤2,5 |
| Pipérine | X≤2,5 |
| Gomme | 1 <X≤30 |
| Géraniol | X≤2,5 |
| Béta caryophyllène | X≤2,5 |
| Huile | Complément à 100% |

125 ml de la composition de l'exemple 1 permettent d'enrober 15kg de graines. La composition de l'exemple 5 est utilisée pour l'enrobage des graines. Du fait de la présence d'huile et de gomme, elle permet un bon enrobage des graines dans un dispositif de type bétonnière, par exemple. L'enrobage est résistant à la rosée et aux faibles averses. Le temps de rémanence est de 2 mois.

Cette composition exerce une action répulsive sur le sanglier, le lapin, le corbeau, le chevreuil, le sanglier, la taupe et le vers taupin. L'action répulsive est due en grande partie à l'odeur dégagée par la graine enrobée et probablement à son goût si la graine enrobée a été consommée. La Demanderesse a néanmoins constaté que très peu de graines sont consommées par les corbeaux lesquels ont un odorat moins développé que les mammifères précités. Ce résultat suggère que l'effet répulsif est dû à l'odeur de la graine enrobée, laquelle est même perceptible par les oiseaux, notamment les corbeaux et les pigeons ramiers.

Cette composition est également répulsive sur les insectes susceptibles de parasiter les graines ou de s'en nourrir. Ainsi, sur le blé, elle s'est avérée avoir une action répulsive sur la cicadelle.

### Composition majoritairement aqueuse apte être pulvérisée

Les compositions des exemples 1 à 5 et plus particulièrement 1 à 4 sont diluées en deux étapes dans de l'eau. En particulier, 1L de chaque composition relative au premier/deuxième mode de réalisation est diluée dans 450ml d'eau pour obtenir une première solution aqueuse. Cette solution est ensuite diluée dans 60L d'eau ou 3L et pulvérisée sur une surface ou sur une plante. Cette composition a un effet répulsif et n'endommage pas la plante. De manière générale, ces compositions peuvent être diluées dans un volume d'eau allant de 3L à 200L.

La composition finale qui peut être utilisée en pulvérisation contient donc 96, 45% ou 99,13% d'eau en volume.

Cette composition s'avère être efficace pour la répulsion des animaux suivants : chevreuil, chien, corbeau, lapin, sanglier, taupe et vers taupin. La composition peut être pulvérisée sur une plantation ou seulement sur une surface (dans le cas du chien, par exemple, l'effet répulsif est souhaité pour un trottoir, par exemple). La pulvérisation de la composition d'endommage pas la plante quelle qu'elle soit.

Pour la taupe, la composition est diluée dans 3L d'eau et non 60L. On dépose des chiffons imbibés de la composition de l'invention à l'entrée ou dans les galeries creusées par la taupe. On constate que la taupe ne fait plus de taupinière dans un rayon de 10 à 15 m autour de la taupinière traitée.

S'agissant des parasites ou autres de type insectes, la composition de l'exemple 1 diluée dans 60L permet de traiter le blé. Elle s'avère efficace sur la mouche mineuse, les pucerons, quel que soit le stade de développement de la plante, les larves des lémas, les cecidomyies et la tordeuse des céréales. Elle permet également de traiter les pucerons sur le prunier, notamment ainsi que sur d'autre arbres fruitiers, comme le pommier et le poirier.

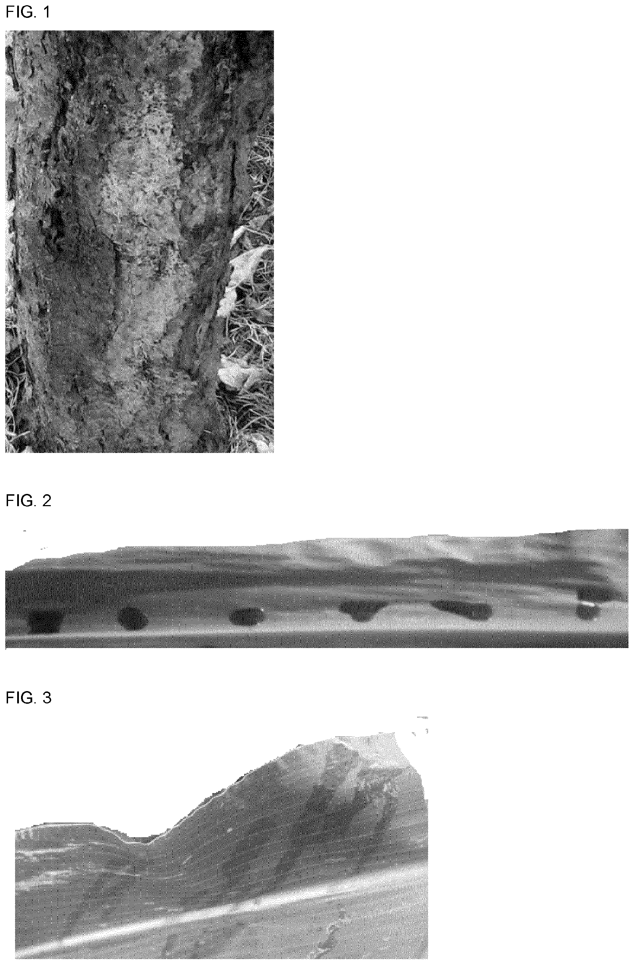

La Fig. 1 représente un tronc de prunier initialement infesté par les pucerons et les fourmis qui viennent traire ces derniers. Une pulvérisation de la composition selon l'exemple 1 diluée à 60L a été effectuée sur le tronc de l'arbre seulement ; les pucerons en contact avec la composition de l'invention ont été tués. Deux mois après cette pulvérisation, on constate comme cela est visible sur la Fig. 1 que le tronc de l'arbre est exempt de pucerons et de fourmis. L'action insectifuge de la composition selon l'invention est vérifiée.

La composition selon l'exemple 1, même diluée avec 60L d'eau s'avère efficace également pour le traitement des pucerons de l'épicéa, de la galle causée par les acariens, notamment sur le fuchsia, les maladies cryptogamiques du saule crevette (anthracnose et oïdium notamment) des arbres fruitiers comme le pommier, le prunier et le poirier et celles de l'hortensia, le chrysomèle, les pucerons du rosier, la mouche du houx ainsi que les pucerons et chenilles qui infestent le houx.

La composition de l'exemple 1 diluée est appliquée de préférence avant la floraison et par temps sec. Sa durée de rémanence pour les insectes est également de 2 mois par temps sec. Elle permet de traiter de 500 à 800 arbres fruitiers.

La composition selon l'exemple 1 diluée a été pulvérisée sur un champ de blé. Le temps de rémanence est de 2 mois sans forte pluie (forte pluie = 80mm d'eau par heure). La présence de la gomme permet de bien faire adhérer la composition sur la plante ; elle résiste ainsi à la rosée et aux pluies. Sur les arbres, elle est de préférence appliquée sur le tronc, lequel est moins soumis à la pluie que la ramure.

Sur le sanglier et le chevreuil, après pulvérisation, sur un champ de blé, aucune trace des animaux précités n'a été observée dans un rayon de 20 m autour du champ. Résultats pour la composition selon l'exemple 2 diluée sur la martre (dilution avec 3L d'eau)

La composition selon l'exemple 2 est diluée conformément à ce qui a été expliqué en référence à la composition selon l'exemple 1.

Une zone habituellement fréquentée par les martres (plantation de framboisiers car les martres raffolent des framboises) a été pulvérisée avec la composition selon l'exemple 3 diluée. Les plantes et fruits n'ont pas été endommagés par la composition diluée. Ils peuvent même être consommés par des humains après un simple passage sous l'eau. La pulvérisation a été répétée durant 4 à 5 jours à raison d'une pulvérisation par jour. Les martres n'ont plus laissé de traces durant 2 mois dans la zone traitée et alentours.

### Résultats pour la composition selon l'Example 3 diluée sur le rat et la souris (dilution avec 3L d'eau)

La composition selon l'exemple 3 est diluée conformément à ce qui a été expliqué en référence à la composition selon l'exemple 1 avec 3 L d'eau pour la deuxième dilution. Une zone de passage de souris/rats a été pulvérisée par la composition diluée précitée. Après une pulvérisation, il n'y a plus de traces de passage de souris et de rats pendant 2 jours. Une nouvelle pulvérisation est faite, 5 jours après la première. Aucune trace de passage de souris/rats n'a été observée durant au moins 20 jours après la seconde pulvérisation. Ce traitement peut donc être curatif et éloigner des souris/rats déjà habitués à fréquenter une zone. La composition diluée n'abîme aucune plantation.

Résultats pour la composition selon l'exemple 4 diluée sur le chat (dilution avec 60L) La composition selon l'exemple 4 a été diluée comme expliqué en référence à l'exemple 2.

Une zone engazonnée a été pulvérisée avec cette composition diluée. Deux jours plus tard, on ne constate plus de nouvelles traces de passage de chats. Aucun passage de chat n'a été observé ou détecté par des traces jusqu'à 25 jours après la pulvérisation. La zone engazonnée n'est pas endommagée par la pulvérisation.

Composition biphasique à agiter avant emploi (particulièrement active sur le chien) Exemple 6

**Tableau 6**

| Ingrédient | % massique |
|---|---|
| Capsaïcine | 2,5<X≤10.0 |
| Pipérine | 10,0<X≤25,0 |
| Gomme | 1 <X≤30 |
| Huile | En complément à 100% |

De l'eau est ajoutée à la composition huileuse du tableau 6 pour obtenir un mélange biphasique. A un volume de l'ordre de 100 à 250 mL (bornes comprises) de la composition huileuse précitée, on ajoute 250 à 400 ml d'eau de manière à obtenir au total 500 mL de mélange biphasique. Ce mélange est agité avant emploi de manière à obtenir une émulsion qui peut être vaporisée. 500mL du mélange permettent de traiter une surface de 20 à 50 m². La rémanence de la composition est de 2 mois si l'application par pulvérisation est effectuée par temps sec.

### Résistance au lessivage par l'eau

Afin de tester la résistance à la pluie, on a appliqué une composition de l'invention selon l'un quelconque des exemples précités (donc contenant une gomme) sur une feuille de maïs et l'on a appliqué la même composition répulsive mais ne contenant pas de gomme sur une autre feuille de maïs. Les feuilles de maïs ont ensuite été pulvérisées avec de l'eau (10L d'eau pulvérisés durant 15 min sur chaque feuille). Les feuilles sont mises à sécher. On observe ensuite la forme des taches formées par le produit appliqué.

La Figure 2 représente une photographie de la feuille de maïs après lessivage sur laquelle une composition de l'invention selon l'un quelconque des exemples précités a été appliquée

La Fig. 3 représente une photographie de la feuille de maïs après lessivage sur laquelle la même composition que celle utilisée pour la Fig. 2 mais ne contenant pas de gomme a été appliquée.

En référence à la Fig. 2, on constate que le produit forme des taches dont le contour est bien défini. Sur la Fig. 3 en revanche, le produit a coulé et forme des traînées ou coulures, indiquant que l'eau à bien dilué et emporté (lessivé) la composition répulsive sans gomme.

## Revendications

1. Composition liquide apte à procurer un effet répulsif sur un nuisible, sans contact avec ledit nuisible lors de l'application de ladite composition, ledit nuisible étant choisi parmi les mammifères, les oiseaux, les insectes et les acariens, contenant en tant que composés actifs un composé de la famille des capsaïcinoides ou de leurs dérivés, en particulier la capsaïcine, ou un mélange de capsaïcinoides, de la pipérine et un excipient choisi parmi une huile, notamment végétale, un mélange d'au moins deux huiles, notamment végétales ou un mélange d'eau et d'huile(s), notamment végétale(s), **caractérisée en ce qu'**elle contient en outre une gomme choisie parmi la gomme adragante, la gomme arabique, la gomme xanthane, la gomme guar, la gomme gellane, la gomme de casse et la gomme karaya et/ou un émulsifiant de type polysaccharide ou choisi en particulier parmi la gélatine et la cellulose.

2. Composition selon la revendication 1, **caractérisée en ce qu'**elle contient, en outre, au moins un ingrédient actif choisi parmi le géraniol, le béta caryophyllène, le linalol, l'acétate de linalyle, le camphre, l'eucalyptol, le menthol, la menthone, le limonène, l'alpha pinène, le beta pinène, le p-cymène et le gamma terpinène.

3. Composition selon la revendication 2, **caractérisée en ce qu'**elle contient, en outre, en tant qu'ingrédients actifs, du linalol, de l'acétate de linalyle et du camphre.

4. Composition selon la revendication 2, **caractérisée en ce qu'**elle contient, en outre, en tant qu'ingrédients actifs de l'eucalyptol, du menthol et de la menthone, du limonène, de l'alpha pinène, du béta pinène et du béta caryophillène.

5. Composition selon la revendication 2, **caractérisée en ce qu'**elle contient, en outre, en tant qu'ingrédients actifs de l'eucalyptol, du limonène, de l'alpha pinène, du p-cymène, du gamma terpinène.

6. Composition selon la revendication 2, **caractérisée en ce qu'**elle contient en outre, en tant qu'ingrédients actifs, du géraniol et du béta caryophyllène.

7. Composition selon l'une quelconque des revendications 1 à 6, **caractérisée en ce qu'**elle contient en tant qu'excipient une huile ou un mélange d'huile, **en ce qu'**elle contient un pourcentage massique de capsaïcine sensiblement supérieur ou égal à 1,5% et sensiblement inférieur ou égal à 15%, notamment sensiblement égal ou supérieur à 2,5% ou sensiblement égal ou inférieur à 10% et/ou un pourcentage massique de pipérine sensiblement égal ou supérieur à 10% ou sensiblement égal ou inférieur à 25%

8. Composition selon l'une quelconque des revendication précédentes, **caractérisée en ce qu'**elle contient en outre de l'eau en tant qu'excipient et **en ce qu'**elle contient en volume au moins 25%, en particulier 30%, 80% d'eau et en particulier, au moins 90 % d'eau.

9. Procédé de répulsion d'un nuisible choisi parmi les insectes ou arachnides, en particulier les pucerons, les acariens, la cicadelle, les chenilles, la mouche du houx, le vers taupin, le chrysomèle, les cecidozoaires, les acariens responsables de la gale, la mineuse, la larve du léma, les cecidomyies, la tordeuse des céréales, les mammifères, en particulier, le lapin, les cervidés, en particulier le chevreuil, le sanglier, la martre, le chien, le chat, la taupe, les oiseaux, en particulier le corbeau et le pigeon ramier, **caractérisé en ce que** l'on enrobe des graines avec une composition selon l'une quelconque des revendications 1 à 8 et/ou **en ce que** l'on applique ladite composition selon l'une quelconque des revendications 1 à 8 sur une zone éventuellement végétalisée ou sur un végétal, sans contact avec ledit nuisible.
